# EUROPÄISCHE PATENTSCHRIFT

(11) **EP 1 088 157 B1**
(45) Veröffentlichungstag und Bekanntmachung des Hinweises auf die Patenterteilung: **03.04.2002**
(21) Anmeldenummer: 99927897.1
(22) Anmeldetag: 07.06.1999
(51) Int. Cl.: F02D 41/04, B01D 53/94

(54) **VERFAHREN ZUR DE-SULFATIERUNG EINES NO x?-SPEICHERKATALYSATORS**
METHOD FOR DESULPHATIZING AN NO x? ACCUMULATOR CATALYTIC CONVERTER
PROCEDE DE DESULFATATION D'UN CATALYSEUR ACCUMULATEUR DE NO x?

(30) Priorität: 18.06.1998 DE 19827195
(43) Veröffentlichungstag der Anmeldung: 04.04.2001
(73) Patentinhaber: Volkswagen Aktiengesellschaft, 38436 Wolfsburg (DE)
(72) Erfinder: POTT, Ekkehard, D-38518 Gifhorn (DE)
(74) Vertreter: Schneider, Henry, Dipl.-Ing.
(86) Internationale Anmeldenummer: EP9903912
(87) Internationale Veröffentlichungsnummer: WO9966185

(56) Entgegenhaltungen:
- EP-A- 0 244 127
- EP-A- 0 878 610
- WO-A-98/12423
- GB-A- 2 318 418

## Beschreibung

Die vorliegende Erfindung betrifft ein Verfahren zur De-Sulfatierung eines einer Brennkraftmaschine nachgeschalteten NOₓ-Speichers oder NOₓ-Speicherkatalysators gemäß dem Oberbegriff des Anspruchs 1.

NOₓ-Speicherkatalysatoren dienen zur Speicherung von NOₓ bei magerbetriebenen Brennkraftmaschinen. Bei Verwendung von schwefelhaltigen Kraftstoffen der heute üblichen Art werden an den katalytisch wirksamen Oberflächen jedoch stets auch stabile Sulfate gebildet, die zu einer schleichenden Vergiftung des Katalysators führen und dessen NOₓ-Einlagerungsfähigkeit allmählich verringern. Im Unterschied zu einer Bleivergiftung bei 3-Wege-Katalysatoren ist eine solche Sulfatvergiftung eines NOₓ-Speicherkatalysators jedoch vollständig oder zumindest überwiegend reversibel, sofern hinreichend hohe Katalysatortemperaturen von mehr als etwa 550 °C und ein hinreichend hohes Schadstoffangebot bei geringem Restsauerstoffgehalt vorliegen.

Bei NOₓ-Speicherkatalysatoren wird daher in der Praxis durch Einstellung einer geeigneten Temperatur und Absenkung des Sauerstoffgehaltes, d. h. Verringerung des Lambda-Wertes, in periodischen Abständen eine Entschwefelung oder De-Sulfatierung durchgeführt. Der Lambdawert liegt hierbei üblicherweise unter 1,05 und vorzugsweise sogar unter 1, d. h. im fetten Betriebsbereich der Brennkraftmaschine, da eine De-Sulfatierung bei höheren Lambda-Werten mit einer zu geringeren Reaktionsgeschwindigkeit erfolgen würde, was mit unerwünscht hohen De-Sulfatierungszeiten verbunden wäre.

Bei einer De-Sulfatierung von NOₓ-Speicherkatalysatoren wird der eingelagerte Schwefel im wesentlichen in Form von SO₂ und H₂S freigesetzt, wobei in geringen Mengen auch noch weitere schwefelhaltige Moleküle gebildet werden. Mit fetterem Abgas, d. h. mit Absinken des Lambda-Wertes, wird zunehmend weniger SO₂ und mehr H₂S erzeugt, dessen Bildung wegen der auftretenden Geruchsbelästigung jedoch unerwünscht ist. Zur Vermeidung einer solchen Geruchsbelästigung erfolgt die De-Sulfatierung von NOₓ-Speicherkatalysatoren im Stand der Technik bei Lambda-Werten von mehr als etwa 0,98, da das H₂S dann nur noch in vernachlässigbar geringen Mengen gebildet wird. Dieser Vorteil ist allerdings mit nach wie vor noch recht langen De-Sulfatierungszeiten und damit wiederum mit einem entsprechend hohen Verbrauch verbunden.

Die Aufgabe der vorliegenden Erfindung besteht daher in der Schaffung eines Verfahrens, das bei Unterdrückung der unerwünschten Nebenproduktbildung die De-Sulfatierung eines NOₓ-Speicherkatalysators in möglichst kurzer Zeit ermöglicht.

Diese Aufgabe wird bei einem Verfahren gemäß dem Oberbegriff des Anspruches 1 dadurch gelöst, daß die Brennkraftmaschine bei der De-Sulfatierung in Form mehrerer Fett-Mager-Zyklen mit einer zyklischen Absenkung des Lambda-Wertes auf weniger als 0,98 betrieben wird. Um eine Geruchsbelästigung durch Schwefelwasserstoff zu vermeiden, wird die Absenkungsdauer hierbei so kurz gewählt, daß möglichst keine spürbare Emission von Schwefelwasserstoff feststellbar ist.

Diese erfindungsgemäße Lehre beruht auf der Erkenntnis, daß der im Katalysator eingelagerte Schwefel bei einer Absenkung des Lambda-Wertes auf weniger als etwa 0,98 zunächst beschleunigt in Form eines charakteristischen SO₂-Emissionspeaks freigesetzt wird, während die Schwefelwasserstoffbildung erst mit einer gewissen Zeitverzögerung einsetzt, insgesamt deutlich langsamer abläuft und sich über einen längeren Zeitraum erstreckt als die SO₂-Bildung.

Bei der De-Sulfatierung eines vergifteten NOx-Speicherkatalysators wird daher nach Einstellung einer vorbestimmten De-Sulfatierungstemperatur zunächst ein Großteil des eingelagerten Schwefels durch Einstellung eines Lambda-Wertes von weniger als 0,98 freigesetzt, wobei die unerwünschte Schwefelwasserstoffbildung durch rechtzeitige Rückkehr in den mageren Betriebsbereich gezielt verhindert wird. Nach Beendigung eines solchen Fett-Mager-Zyklus erfolgen dann ein oder mehrere weitere Zyklen, um auch den restlichen Schwefel freizusetzen und um den Katalysator bis zu dem gewünschten Entschwefelungsgrad zu regenerieren.

Durch dieses erfindungsgemäße Verfahren läßt sich nicht nur die Bildung unerwünschter Nebenprodukte und hierbei insbesondere die Schwefelwasserstoffbildung wirksam unterdrücken, sondern es ergeben sich trotz Verwendung mehrerer Regenerationszyklen auch wesentlich kürzere Regenerationszeiten als nach dem Stand der Technik, da die einzelnen Zyklen auf Grund der starken Beschleunigung der SO₂-Bildung mit abnehmendem Lambda-Wert entsprechend kurz ausfallen.

Bei dem erfindungsgemäßen Verfahren erweisen sich Lambda-Werte zwischen 0,88 und 0,985 als besonders vorteilhaft. Hierbei ist insbesondere der Bereich zwischen 0,93 und 0,96 zu bevorzugen, wobei sich wiederum Werte zwischen 0,945 und 0,955 als besonders geeignet erweisen.

Die Absenkungsdauer beträgt hierbei vorzugsweise zwischen 0,5 und 30 s, wobei sich der Bereich zwischen 1 und 20 s und hierbei insbesondere wiederum der Bereich zwischen 2 und 10 s als besonders vorteilhaft erweist.

Die zu diesen Absenkungsdauern oder Fettzeiten gehörenden Magerzeiten der Fett-Mager-Zyklen liegen vorzugsweise zwischen 0,5 und 10 s, wobei sich der Bereich zwischen 2 und 6 s als besonders geeignet erweist.

Die Auswahl der optimalen Verfahrensparameter, wie z. B. die Fett- und Magerzeiten, die Anzahl an Fett-Mager-Zyklen und der hierbei jeweils verwendete Lambda-Wert, richtet sich im wesentlichen nach den jeweils verwendeten Edelmetall- und Speichersubstanzen, der O₂-Speicherfähigkeit der Washcoats, dem Katalysatorvolumen, der Raumgeschwindigkeit, der Abgaszusammensetzung im Fetten und Mageren, der gespeicherten Schwefelmasse, der örtlichen Verteilung des gespeicherten Schwefels und der Temperatur des Speicherkatalysators. Im Hinblick auf eine Optimierung des Verfahrens kann es sich hierbei als vorteilhaft erweisen, wenn die Fett- und Magerzeiten und/oder der Lambda-Wert in den einzelnen Fett-Mager-Zyklen unterschiedlich gewählt wird.

Weitere Merkmale und Vorteile des erfindungsgemäßen Verfahrens ergeben sich nicht nur aus den zugehörigen Ansprüchen - für sich und/oder in Kombination - sondern auch aus der nachfolgenden ausführlichen Beschreibung eines bevorzugten Ausführungsbeispiels in Verbindung mit den zugehörigen Zeichnungen. In den Zeichnungen zeigen:
Fig. 1 die SO₂- und H2S-Bildung bei der De-Sulfatierung eines NOₓ-Speicherkatalysators als Funktion der Zeit für λ = 0,98 und
Fig. 2 eine zu Fig. 1 entsprechende Darstellung für λ = 0,95.

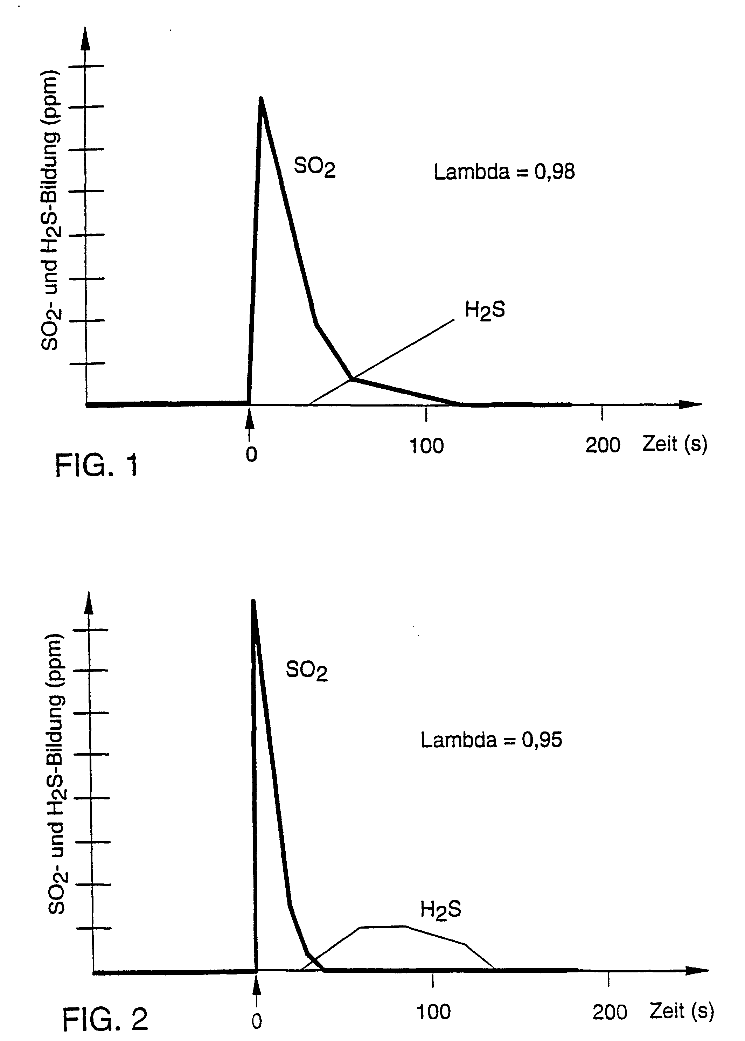

Die De-Sulfatierung eines NOₓ-Speicherkatalysators ist durch das Auftreten eines ausgeprägten charakteristischen SO₂-Emissionspeaks gekennzeichnet. Zu Beginn der De-Sulfatierung, d. h. zum Zeitpunkt t = 0, ist zunächst ein sehr starker nahezu sprunghafter Anstieg der SO₂-Bildung zu beobachten. Bereits nach kurzer Zeit wird ein scharf ausgeprägtes Maximum erreicht, nach dessen Durchlaufen die SO₂-Bildung zunächst rasch wieder abnimmt, um sich dann allmählich dem Wert 0 zu nähern, der bei dem in Fig. 1 dargestellten Fall einer De-Sulfatierung bei λ = 0,98 nach etwa 110 s erreicht wird. Wie zu erkennen ist, wird praktisch der gesamte im Katalysator gespeicherte Schwefel in Form von Schwefeldioxid emittiert. Eine Schwefelwasserstoffbildung ist praktisch nicht feststellbar, so daß bei einer Regeneration des NOₓ-Speicherkatalysators keine entsprechende Geruchsbelästigung zu befürchten ist.

Bei einer solchen Regeneration wird daher der Lambda-Wert nach Einstellung einer bestimmten De-Sulfatierungstemperatur von mehr als 550°C aus dem mageren Betriebsbereich der Brennkraftmaschine einfach auf den angegebenen Wert von 0,98 abgesenkt und dann so lange bei diesem Wert belassen, bis das gewünschte Ausmaß an De-Sulfatierung. d. h. üblicherweise eine nahezu vollständige Entschwefelung, erreicht ist. Bei dieser aus dem Stand der Technik bekannten Vorgehensweise ist je nach gewünschtem De-Sulfatierungsgrad in der Praxis jedoch ein recht langer Zeitaufwand von ≥ 100 s erforderlich. Nach erfolgter Regeneration des NOₓ-Speicherkatalysators werden einfach durch Erhöhung des Lambda-Wertes wieder die ursprünglichen Betriebsbedingungen im mageren Betriebsbereich der Brennkraftmaschine eingestellt bis der Katalysator durch den im Kraftstoff enthaltenen Schwefel erneut vergiftet und zur Aufrechterhaltung einer ordnungsgemäßen Funktionsweise eine erneute Regeneration erforderlich ist.

Diese herkömmliche De-Sulfatierung eines durch Schwefel vergifteten NOₓ-Speicherkatalysators läßt sich, wie nachfolgend beschrieben wird, durch das erfindungsgemäße Verfahren bei gleichzeitiger Unterdrückung der unerwünschten Nebenproduktbildung merklich beschleunigen, was letztendlich wiederum mit einer entsprechenden Verbrauchsminderung verbunden ist.

Wie in Fig. 2 zu erkennen ist, führt eine weitere Absenkung des Lambda-Wertes auf beispielsweise 0,95 nämlich zu einer merklichen Beschleunigung der SO₂-Bildung, die sich in Form eines scharfen SO₂-Emissionspeaks bemerkbar macht, der im Vergleich zu dem in Fig. 1 dargestellten Emissionspeak für λ= 0,98 durch einen steileren Anstieg, ein höheres Maximum und einen wesentlich rascheren Abfall gekennzeichnet ist. Die SO₂-Bildung ist hierbei noch etwa 30 s praktisch bereits abgeschlossen, während hierfür bei λ = 0,98 etwa 110 s erforderlich sind. Andererseits jedoch setzt kurz vor Beendigung der SO₂-Bildung, im Unterschied zu Fig. 1, eine spürbare Schwefelwasserstoffbildung ein, die jedoch insgesamt deutlich langsamer abläuft als die SO₂-Bildung und sich auch nach deren Beendigung noch über einen längeren Zeitraum erstreckt.

Der im Katalysator eingelagerte Schwefel wird bei einem Lambda-Wert von 0,95 somit nicht nur, wie bei λ = 0,98, in Form von Schwefeldioxid emittiert sondern in einem beachtlichen Anteil auch in Form von Schwefelwasserstoff, der bei einer Regeneration des vergifteten Katalysators nach dem oben erwähnten herkömmlichen De-Sulfatierungsverfahren mit einem Betreiben der Brennkraftmaschine im fetten Bereich bis zum Erreichen eines gewünschten Entschwefelungsgrades zu einer inakzeptablen Geruchsbelästigung führen würde.

Zur Vermeidung einer solchen Geruchsbelästigung wird daher der Lambda-Wert nach Einstellung einer vorbestimmten De-Sulfatierungstemperatur erfindungsgemäß nur für etwa 1 - 20 s, vorzugsweise jedoch für 2 - 10 s, auf 0,95 abgesenkt, da dann die SO₂-Emission zwar bereits weitgehend abgeschlossen, die Schwefelwasserstoffbildung hingegen noch nicht begonnen hat. Anschließend wird die Brennkraftmaschine zur Unterdrückung der Schwefelwasserstoffemission für etwa 0,5 - 10 s, vorzugsweise jedoch für
2 - 6 s, wieder im mageren Bereich betrieben, bevor der Lambda-Wert wiederum für 2-10 s auf 0,95 abgesenkt wird, um auch den nach dem ersten Absenken des Lambda-Wertes im Katalysator noch verbleibenden restlichen Schwefel in Form von Schwefeldioxid freizusetzen und den Katalysator damit nahezu vollständig zu regenerieren. Nach erfolgter De-Sulfatierung oder Regeneration des Katalysators wird der Lambda-Wert schließlich wieder auf seinen Ausgangswert erhöht und die Brennkraftmaschine bis zur nächsten Entschwefelung wieder im mageren Bereich betrieben.

Aufgrund der starken Beschleunigung der SO₂-Bildung mit absinkendem Lambda-Wert ermöglicht das erfindungsgemäße De-Sulfatierungsverfahren trotz Verwendung zumindest zweier Fett-Mager-Zyklen im Vergleich zu herkömmlichen Verfahren bei gleichzeitiger wirkungsvoller Unterdrückung der unerwünschten Nebenproduktbildung im Endeffekt wesentlich kürzere De-Sulfatierungszeiten bis zum Erreichen eines gewünschten Entschwefelungsgrades, was andererseits wiederum mit einer entsprechenden Verbrauchsminderung verbunden ist. Im Praxisbetrieb, bei Schwefeldurchsätzen von 2 bis 50 g Schwefel zwischen zwei Entschwefelungen, wird eine Anzahl von 5 bis 50 üblicherweise von 10 bis 20 Fett-Mager-Zyklen, zur Entschwefelung erforderlich sein. Ziel ist den Anteil der H₂S-Emission an der gesamten Schwefelemission von ca. 70 % bei λ = 0,95_{const bzw}. 50 % bei λ = 0,98_{const} auf < 10 % und idealerweise auf < 2 % abzusenken.

Der zur De-Sulfatierung eines vorgegebenen vergifteten NOₓ-Speicherkatalysators verwendete Lambda-Wert, die Dauer der jeweiligen Fett- und Magerzeiten und die zur Erreichung eines gewünschten Entschwefelungsgrades erforderliche Anzahl an Fett-Mager-Zyklen richtet sich hierbei, wie bereits erwähnt wurde, nach den verwendeten Edelmetall- und Speichersubstanzen, der O₂-Speicherfähigkeit des Washcoats, dem Katalysatorvolumen, der Raumgeschwindigkeit, der Abgaszusammensetzung im Fetten und Mageren, der gespeicherten Schwefelmasse, der örtlichen Verteilung des gespeicherten Schwefels und der Speicherkattemperatur. Zum Erreichen eines optimalen Regenerationsverhaltens können die Fett- und Magerzeiten der einzelnen Zyklen hierbei je nach Bedarf auch unterschiedlich lang gewählt werden, wobei zusätzlich in den einzelnen Zyklen auch unterschiedliche Lambda-Werte eingestellt werden können.

## Patentansprüche

1. Verfahren zur De-Sulfatierung eines einer mager betriebenen Brennkraftmaschine nachgeschalteten NOₓ-Speicherkatalysators durch Einstellung einer vorbestimmten De-Sulfatierungstemperatur, intermittierendes Betreiben der Brennkraftmaschine im fetten Bereich und Rückkehr zu normalen Betriebsbedingungen nach erfolgter De-Sulfatierung,
**dadurch gekennzeichnet,**
**daß** das intermittierende Betreiben der Brennkraftmaschine im fetten Bereich in Form mehrerer Fett-Mager-Zyklen mit einer zyklischen Absenkung des Lambda-Wertes auf weniger als 0,985 erfolgt, wobei die Absenkungsdauer jeweils so kurz gewählt wird, daß die Emission von Schwefelwasserstoff gering ist.

2. Verfahren nach Anspruch 1,
**dadurch gekennzeichnet,**
**daß** ein Lambda-Wert zwischen 0,88 und 0,985 eingestellt wird.

3. Verfahren nach Anspruch 2,
**dadurch gekennzeichnet,**
**daß** ein Lambda-Wert zwischen 0,93 und 0,97 eingestellt wird.

4. Verfahren nach Anspruch 3,
**dadurch gekennzeichnet,**
**daß** ein Lambda-Wert zwischen 0,945 und 0,955 eingestellt wird.

5. Verfahren nach einem der vorhergehenden Ansprüche,
**dadurch gekennzeichnet,**
**daß** die Absenkungsdauer 0,5 - 30 s beträgt.

6. Verfahren nach Anspruch 5
**dadurch gekennzeichnet,**
**daß** die Absenkungsdauer 1 - 20 s beträgt.

7. Verfahren nach Anspruch 6
**dadurch gekennzeichnet,**
**daß** die Absenkungsdauer 2 - 10 s beträgt.

8. Verfahren nach einem der vorhergehenden Ansprüche,
**dadurch gekennzeichnet,**
**daß** die Magerzeiten der Fett-Mager-Zyklen 0,5 - 10 s betragen.

9. Verfahren nach Anspruch 8,
**dadurch gekennzeichnet,**
**daß** die Magerzeiten der Fett-Mager-Zyklen 2 - 6 s betragen.

10. Verfahren nach einem der vorhergehenden Ansprüche,
**dadurch gekennzeichnet,**
**daß** die Fett- und Magerzeiten und/oder der Lambda-Wert in den einzelnen Fett-Mager-Zyklen unterschiedlich gewählt werden.

## Claims

1. Method for desulphatizing an NOₓ storage catalyst arranged downstream of an internal combustion engine operated on a lean mixture by setting a predetermined desulphatizing temperature, operating the internal combustion engine intermittently in the rich-mixture range and returning to normal operating conditions once desulphatization has been accomplished, **characterized in that** the intermittent operation of the internal combustion engine in the rich-mixture range takes the form of a plurality of rich-/lean-mixture cycles with the lambda value being lowered cyclically to less than 0.985, the selected time over which the lambda value is lowered being so short that the emissions of hydrogen sulphide are low.

2. Method according to Claim 1, **characterized in that** a lambda value between 0.88 and 0.985 is set.

3. Method according to Claim 2, **characterized in that** a lambda value between 0.93 and 0.97 is set.

4. Method according to Claim 3, **characterized in that** a lambda value between 0.945 and 0.955 is set.

5. Method according to one of the preceding claims, **characterized in that** the lambda value is lowered for 0.5 to 30 seconds.

6. Method according to Claim 5, **characterized in that** the lambda value is lowered for 1 to 20 seconds.

7. Method according to Claim 6, **characterized in that** the lambda value is lowered for 2 to 10 seconds.

8. Method according to one of the preceding claims, **characterized in that** the lean-mixture periods in the rich-/lean-mixture cycles last for 0.5 to 10 seconds.

9. Method according to Claim 8, **characterized in that** the lean-mixture periods in the rich-/lean-mixture cycles last for 2 to 6 seconds.

10. Method according to one of the preceding claims, **characterized in that** different rich- and lean-mixture periods and/or lambda values are chosen in the individual rich-/lean-mixture cycles.

## Revendications

1. Procédé de désulfatation d'un catalyseur accumulateur de NOx raccordé en aval d'un moteur à combustion interne travaillant sur mélange pauvre, par établissement d'une température prédéterminée de désulfatation, l'utilisation intermittente du moteur à combustion interne sur un mélange riche et le retour aux conditions normales de fonctionnement lorsque la désulfatation est terminée, **caractérisé en ce que** le fonctionnement intermittent du moteur à combustion interne dans la plage riche s'effectue sous la forme de plusieurs cycles de richesse - pauvreté avec diminution cyclique de la valeur de lambda à moins de 0,985, la durée de la diminution étant chaque fois sélectionnée suffisamment courte pour que l'émission de sulfure d'hydrogène soit faible.

2. Procédé selon la revendication 1, **caractérisé en ce que** l'on établit une valeur de lambda comprise entre 0,88 et 0,985.

3. Procédé selon la revendication 2, **caractérisé en ce que** l'on établit une valeur de lambda comprise entre 0,93 et 0,97.

4. Procédé selon la revendication 3, **caractérisé en ce que** l'on établit une valeur de lambda comprise entre 0,945 et 0,955.

5. Procédé selon l'une des revendications précédentes, **caractérisé en ce que** la durée de la diminution représente entre 0,5 et 30 s.

6. Procédé selon la revendication 5, **caractérisé en ce que** la durée de la diminution représente entre 1 et 20 s.

7. Procédé selon la revendication 6, **caractérisé en ce que** la durée de la diminution représente entre 2 et 10 s.

8. Procédé selon l'une des revendications précédentes, **caractérisé en ce que** les durées de pauvreté des cycles de richesse - pauvreté représentent entre 0,5 et 10 s.

9. Procédé selon la revendication 8, **caractérisé en ce que** les durées de pauvreté des cycles de richesse - pauvreté représentent entre 2 et 6 s.

10. Procédé selon l'une des revendications précédentes, **caractérisé en ce que** les durées de richesse et de pauvreté et/ou la valeur de lambda des cycles individuels de richesse - pauvreté sélectionnées sont différentes.
